# EUROPÄISCHE PATENTSCHRIFT

(11) **EP 3 405 765 B1**
(45) Veröffentlichungstag und Bekanntmachung des Hinweises auf die Patenterteilung: **16.03.2022**
(21) Anmeldenummer: 17700570.9
(22) Anmeldetag: 19.01.2017
(51) Int. Cl.: G01M 3/40, G01M 3/32, B65B 9/04, B65B 31/02, B65B 61/02, G01N 21/90, G01N 21/77, G01M 3/22, B65B 25/00

(54) **VERFAHREN UND VERPACKUNGSMASCHINE ZUR HERSTELLUNG EINER VERPACKUNG MIT EINER GEÄNDERTEN ATMOSPHÄRE UND ENTSPRECHENDE VERPACKUNG**
METHOD AND PACKAGING MACHINE FOR PRODUCING PACKAGES HAVING A MODIFIED ATMOSPHERE AND CORRESPONDING PACKAGE
PROCÉDÉ ET DISPOSITIF DE FABRICATION D'EMBALLAGES À ATMOSPHÈRE MODIFIÉE ET EMBALLAGE CORRESPONDANT

(30) Priorität: 20.01.2016 DE 102016200749; 09.03.2016 DE 102016203876; 11.03.2016 DE 102016204085; 17.05.2016 DE 102016208441; 27.05.2016 DE 102016209207; 20.06.2016 EP 16175264; 11.07.2016 DE 102016212574; 15.07.2016 DE 102016213009; 15.07.2016 DE 102016213010
(43) Veröffentlichungstag der Anmeldung: 28.11.2018
(73) Patentinhaber: GEA Food Solutions Germany GmbH, 35216 Biedenkopf-Wallau (DE)
(72) Erfinder: STEFFEN, Andreas, 35116 Hatzfeld (DE); MÜLLER, Sven, 35216 Biedenkopf (DE)
(74) Vertreter: Kutzenberger Wolff & Partner
(86) Internationale Anmeldenummer: PCT/EP2017/051064
(87) Internationale Veröffentlichungsnummer: WO 2017/125482

(56) Entgegenhaltungen:
- EP-A1- 2 256 042
- EP-A2- 0 586 894
- WO-A1-98/38112
- WO-A1-2011/091811
- GB-A- 2 524 159
- US-A- 3 592 049
- US-A- 5 226 316
- US-A1- 2007 212 789
- US-A1- 2011 244 577

## Beschreibung

Die vorliegende Erfindung betrifft ein Verfahren zur Herstellung einer Verpackung, vorzugsweise einer Lebensmittelverpackung und/oder einer Verpackung anderer sensitiver, beispielsweise steriler Produkte, einer Verpackungsmaschine und die Verpackung selbst.

EP 2256042 A1 beschreibt ein Verfahren zur Herstellung einer Verpackung mit einer geänderten Atmosphäre gemäß dem Oberbegriff des Anspruchs 1. Ein Verfahren zur Herstellung einer Verpackung in einer geänderten Atmosphäre ist auch in US 2007/212789 A1 beschrieben.

Lebensmittelverpackungen erhöhen die Haltbarkeit von Lebensmitteln, aber nur, wenn sie dicht sind. Dabei ist insbesondere die Siegelnaht zwischen einer Verpackungsmulde, in der sich das Lebensmittel befindet und einer Oberfolie, die an die Verpackungsmulde gesiegelt ist, eine Schwachstelle, weil sie verschmutzt sein kann und/oder die erforderliche Temperatur, der erforderliche Druck und/oder die benötigte Siegelzeit zumindest lokal nicht eingehalten wird und/oder ungewollte Falten in Oberfolie und/oder Verpackungsmulde bestehen. Solche Verpackungen sind dann von Anfang an oder nach einiger Zeit undicht. Weiterhin ist es möglich, dass bei Verpackungen mit einer Austauschatmosphäre dieser Austausch unvollständig ist, was wiederum die Verwendungsdauer der darin verpackten Lebensmittel oder sonstiger Verpackungsgüter reduzieren kann.

Es besteht seit langem deshalb ein Bedarf, solche fehlerhaften Verpackungen zerstörungsfrei zu erkennen und auszusortieren und/oder das Verpackungsverfahren und/oder eine Verpackungsmaschine und/oder eine Verpackung möglichst effizient zu gestalten.

Gelöst wird die Aufgabe mit einem Verfahren zur Herstellung einer Verpackung mit einer geänderten Atmosphäre gemäß Anspruch 1.

Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft ein Verfahren zum Verpacken von einem Verpackungsgut, insbesondere einem Lebensmittel oder einem sonstigen sensiblen, beispielsweise sterilen Verpackungsgut, vorzugsweise in einer Kunststofffolie, die auch mehrlagig und aus verschiedenen Werkstoffen bestehend ausgeführt sein kann. Die Verpackung weist eine insbesondere tiefgezogene Verpackungsmulde auf, die mit dem Verpackungsgut befüllt und dann mit einem Deckel, insbesondere einer Deckelfolie verschlossen wird. Die Deckelfolie wird an die Verpackungsmulde gesiegelt. Vor dem Siegeln wird in der Verpackungsmulde vorzugsweise ein Gasaustausch vorgenommen. Dafür wird zunächst die Luft in der Verpackungsmulde abgesaugt und dadurch ein Unterdruck in der Verpackungsmulde erzeugt. Danach wird vorzugsweise das Austauschgas, insbesondere ein Inertgas, beispielsweise CO₂ und/oder N₂ in die Verpackungsmulde eingeleitet und dadurch die Sauerstoffkonzentration in der Verpackungsmulde abgesenkt, wodurch sich beispielsweise die Haltbarkeit des verpackten Lebensmittels erhöht. Es ist aber auch möglich die in der Verpackungsmulde befindliche Atmosphäre mit dem Austauschgas aus der Verpackung zu spülen, also die Atmosphäre in der Verpackungsmulde ohne vorheriges Erzeugen eines Unterdrucks in der Verpackungsmulde zu ändern. Weiterhin ist es möglich lediglich einen Unterdruck in der Verpackung zu erzeugen und dadurch das vorhandene Gasvolumen und/oder beispielsweise den Sauerstoffpartialdruck zu reduzieren. Der Gasaustausch/Unterdruck kann in und/oder vor der Siegelstation und/oder vor bzw. vorzugsweise nach dem Befüllen der Verpackungsmulde mit Verpackungsgut stattfinden. Weiterhin erfindungsgemäß wird in der Siegelstation und/oder stromabwärts von dem Gasaustausch die Konzentration mindestens eines Bestandteils, beispielsweise die Sauerstoffkonzentration, der veränderten Atmosphäre und/oder deren Druck mit einem geeigneten Sensor gemessen und das Signal dieses Sensors an eine Steuerung/Regelung der Verpackungsmaschine übermittelt, die daraus den Sollwert für den Unterdruck und/oder den Sollwert für den Druck des Austauschgases nach dem Gasaustausch und/oder die Sollmenge an Austauschgas errechnet. Dies erfolgt beispielsweise durch einen Vergleich mit Vorgabewerten. Bei dieser Ausführungsform kann so zudem auf die Qualität des Austauschgases geschlossen werden, dessen Konzentration zusätzlich oder alternativ nach dem gleichen Messverfahren beispielsweise in der Zuleitung des Austauschgases gemessen / geprüft werden kann. Gleichermaßen kann beispielsweise der Sauerstoffgehalt in anwesenden Flüssigkeiten und/oder die Feuchtigkeit und/oder der Wasserdampfgehalt der Atmosphäre, beispielsweise beim Prozess der Dampf-Evakuierung, in der Verpackung gemessen werden. Durch eine oder mehrere dieser Maßnahmen kann der Energieverbrauch einer Verpackungsmaschine reduziert und/oder deren Taktzahl erhöht werden. Außerdem werden Verpackungen mit einer unzureichenden Austauschatmosphäre vermieden. Der Fachmann versteht, dass das Signal des Sensors zusätzlich oder ausschließlich an eine Steuerung/Regelung außerhalb der Verpackungsmaschine übermittelt werden kann. Diese sogenannte externe Steuerung kommuniziert ihrerseits vorzugsweise mindestens mit Teilen der Verpackungsmaschinen und/oder benachbarten Maschinen, beispielsweise mit einem Etikettierer und/oder Ausschleusungsgerät, der/das beispielsweise im Bereich der Verpackungsmaschine oder dahinter wirken, und/oder auch mit Maschinen der weiterverarbeitenden und/oder vorgelagerten Prozesse.

Das erfindungsgemäße Verfahren wird beispielsweise unter Zuhilfenahme einer Gaskonzentrationsindikatorsubstanz durchgeführt, die sich innerhalb der Verpackung und dort in Kontakt mit der Atmosphäre in der Verpackung und/oder in einem Raum, der zumindest zeitweise gasseitig in Verbindung mit der Atmosphäre in der Verpackung befindet, durchgeführt. Die Gaskonzentrationsindikatorsubstanz, die vorzugsweise punktförmig aufgetragen wird, ist untenstehend detailliert beschrieben.

Die zu diesem Gegenstand der vorliegenden Erfindung gemachten Ausführungen gelten für die anderen Gegenstände der vorliegenden Erfindung gleichermaßen und umgekehrt.

Die Unter- und/oder Oberfolie weist an der Oberfläche, die mit der Gaskonzentrationsindikatorsubstanz bedruckt wird, vorzugsweise eine PE- oder PET-haltige Schicht auf.

Ein weiterer erfindungsgemäßer oder bevorzugter Gegenstand der vorliegenden Erfindung ist ein Verfahren, bei dem eine Verpackung einen Gaskonzentrationsindikatorsubstanzpunkt aufweist, der mit der Atmosphäre der Verpackung in Kontakt steht, wobei dieser Kontakt vor dem Fertigstellen der Verpackung geschlossen wird.

Die zu diesem Gegenstand der vorliegenden Erfindung gemachten Ausführungen gelten für die anderen Gegenstände der vorliegenden Erfindung gleichermaßen und umgekehrt.

Ein Gaskonzentrationsindikatorsubstanzpunkt im Sinne aller Gegenstände der vorliegenden Erfindung weist eine Substanz auf, bei der sich eine chemische und/oder physikalische Eigenschaft mit der Konzentration eines Gases, beispielsweise Sauerstoff, verändert. Beispielsweise ändert sich deren Farbe und/oder die Wellenlänge deren ausgesendeten Lichts und/oder die Gaskonzentrationsindikatorsubstanz hat eine fluoreszierende Eigenschaft. Beispielsweise wird die Substanz mit sichtbarem Licht, vorzugsweise von einer LED, insbesondere impulsartig bestrahlt und dadurch stimuliert/angeregt und sendet dabei und/oder nach der Bestrahlung Licht aus, das eine andere, insbesondere größere Wellenlänge als das Anregungslicht hat und/oder phasenverschoben ist. Gemessen wird beispielsweise die Wellenlänge des zurückgestrahlten Lichts und/oder die Zeitverschiebung, beispielsweise infolge der veränderten, insbesondere größeren Wellenlänge und/oder infolge der Fluoreszenz. Diese Veränderung(en) kann/können mit einem Sensor nachgewiesen werden.

Der Fachmann versteht, dass ein Punkt im Sinne aller Gegenstände der vorliegenden Erfindung eine diskrete Stelle ist, die eine beliebige Form aufweisen kann. Beispielsweise kann der Gaskonzentrationsindikatorsubstanzpunkt linien-, kreisring- und/oder kreisförmig sein oder eine sonstige beliebige Form aufweisen oder auch mehrteilig sein. Vorzugsweis weist der Punkt in der Transportrichtung der Ober- bzw. Unterfolie eine Länge von 8 - 14, vorzugsweise 10 - 12 mm auf. Die Erstreckung senkrecht dazu beträgt vorzugsweise 8 - 14, vorzugsweise 10 - 12 mm.

Vorzugsweise führen der Sensor und/oder die Beleuchtung, insbesondere die LED in regelmäßigen Abständen und/oder auf Aufforderung eine Selbstdiagnose durch.

Bei dem vorliegenden Verfahren wird der Gaskonzentrationsindikatorsubstanzpunkt zunächst der modifizierten Atmosphäre in der Verpackung ausgesetzt, dann aber, vor der Fertigstellung der Verpackung von dieser Atmosphäre isoliert. Dadurch kann das zuletzt erzielte Messergebnis "eingefroren" werden und verändert sich nicht mehr, auch wenn sich die Atmosphäre um das Verpackungsgut herum verändert. Dieser isolierte Gaskonzentrationsindikatorsubstanzpunkt kann dann als Referenz dienen, insbesondere, wenn ein zweiter Gaskonzentrationsindikatorsubstanzpunkt vorhanden ist, der nicht von der Atmosphäre in dem Raum, in dem sich das verpackte Produkt befindet, isoliert worden ist. Sollten sich diese beiden Gaskonzentrationsindikatorsubstanzpunkte mit der Zeit unterscheiden, ist klar, dass die Verpackung undicht ist und/oder das verpackte Produkt Gas an die Atmosphäre in der Verpackung abgegeben hat und/oder ungewollte Lufteinschlüsse im Produkt, beispielsweise aus Luftblasen zwischen den einzelnen Scheiben eines Produktstapels, erst nach dem Gasaustauschprozess freigeworden sind. Vorzugsweise erfolgt das Isolieren des Gaskonzentrationsindikatorsubstanzpunktes mit einer zweiten Siegelung, die stromabwärts von der ersten Siegelung vorgesehen ist. Die Isolierung kann aber auch durch eine flüssige oder semiflüssige Substanz erfolgen, die beispielsweise einen Verbindungskanal zwischen dem Raum in dem sich das Verpackungsgut befindet und dem Raum, der den Gaskonzentrationsindikatorsubstanzpunkt umschließt, abdichtet. Diese Substanz kann vor Ort härten.

Das Resultat dieser Messung kann zur Steuerung/Regelung mindestens einer Vorrichtung, die sich stromaufwärts von der Messung befindet, eingesetzt werden. Beispielsweise kann damit das Vakuum in einem Kutter gesteuert/geregelt werden.

Noch ein Gegenstand der vorliegenden Erfindung ist ein Verfahren, bei dem die Messung eines Bestandteils der geänderten Atmosphäre mit einem Gaskonzentrationsindikatorsubstanzpunkt erfolgt, der nach der Messung abgetrennt wird.

Die zu diesem Gegenstand der vorliegenden Erfindung gemachten Ausführungen gelten für die anderen Gegenstände der vorliegenden Erfindung gleichermaßen und umgekehrt. Bei diesem Gegenstand der vorliegenden Erfindung wird der Gaskonzentrationsindikatorsubstanzpunkt nach erfolgter Messung abgetrennt. Es erfolgt demnach kein Langzeitnachweis einer bestimmten Konzentration einer Substanz in dem Austauschgas, sondern nur eine Produktionskontrolle. Beispielsweise wird der Gaskonzentrationsindikatorsubstanzpunkt beim Vereinzeln der Verpackungen mit abgetrennt. Diese Ausführungsform der vorliegenden Erfindung hat beispielsweise den Vorteil, dass der optische Eindruck der Verpackung durch den Gaskonzentrationsindikatorsubstanzpunkt nicht verändert wird. Vor dem Abtrennen kann die Verpackung mechanisch belastet werden.

Vorzugsweise erfolgt nach erfolgter Analyse des Gaskonzentrationsindikatorsubstanzpunktes jeder Verpackung eine Klassierung in sogenannte "Gut-" und "Schlechtpackungen", wobei vorzugsweise nur die Gutpackungen mit einem Etikett versehen werden. Schlechtpackungen werden hingegen vorzugsweise ausgeschleust. Werden während laufender Produktion Schlechtpackungen erkannt und der Regelung/Steuerung gelingt es nicht die Gaskonzentration wieder ins Gut-Fenster zu bringen, dann erfolgt eine außergewöhnliche Warnmeldung mit eventueller Fehlerliste /Checkliste für die Fehlersuche, beispielsweise auch nach dem Ausschlussverfahren.

Vorzugsweise werden die erzielten Messergebnisse zur Regelung des Unterdrucks und/oder der Rückbegasung eingesetzt. Vorzugsweise wird als Regelgröße die Packung eines oder mehrerer Formate genommen, bei der die gemessene Gaskonzentration am meisten von dem Sollwert abweicht.

Ein weiterer bevorzugter oder erfindungsgemäßer Gegenstand der vorliegenden Erfindung ist ein Verfahren zur Herstellung und/oder zur Dichtigkeitsprüfung einer Verpackung, bei dem die Verpackung einen Gaskonzentrationsindikatorsubstanzpunkt aufweist, der mit der Atmosphäre der Verpackung in Kontakt steht und bei dem die Temperatur des Gaskonzentrationsindikatorsubstanzpunkts, der Verpackungsmulde, der Oberfolie, der Atmosphäre in der Verpackung und/oder eines Verpackungsguts vor, gleichzeitig und/oder nach der Messung eines Bestandteils der Atmosphäre gemessen wird.

Die zu diesem Gegenstand der vorliegenden Erfindung gemachten Ausführungen gelten für die anderen Gegenstände der vorliegenden Erfindung gleichermaßen und umgekehrt.

Bei diesem Gegenstand der vorliegenden Erfindung wird vor, gleichzeitig und/oder nach der Messung mindestens eines Bestandteils der Atmosphäre der Gasphase in der Verpackung die Temperatur des Gaskonzentrationsindikatorsubstanzpunkts, der Verpackungsmulde, der Oberfolie, der Atmosphäre in der Verpackung und/oder des Verpackungsguts gemessen. Besonders bevorzugt wird mindestens eine dieser Messungen und/oder ein berechneter Wert, beispielsweise ein Mittelwert, aus mehreren dieser Messungen dazu eingesetzt das von dem Sensor gemessene Signal zu bearbeiten, beispielsweise um einen bei einer bestimmten Temperatur gemessenen Kalibrierungswert auf die aktuell gemessene Temperatur umzurechnen.

Vorzugsweise erfolgt die Temperaturmessung berührungslos, beispielsweise mit einem Infrarotsensor, und insbesondere zerstörungsfrei.

Alternativ oder zusätzlich wird der Druck in der Verpackung und/oder des den Gaskonzentrationsindikatorsubstanzpunkt umgebenden Raum mit einem Sensor gemessen und die Messungen beispielsweise dazu eingesetzt das von dem Sensor gemessene Signal zu bearbeiten, beispielsweise um einen bei einem bestimmten Druck gemessenen Kalibrierungswert auf den aktuell gemessenen Druck umzurechnen.

Des Weiteren wird ein Verfahren zum Bedrucken einer Folienbahn mit einer Substanz beschrieben, bei dem sich die Folienbahn während des Substanzauftrags und/oder während des Trocknens der Substanz bewegt.

Das vorliegende Verfahren betrifft ein Verfahren zum Bedrucken von Folienbahnen, insbesondere inline, d.h. innerhalb einer Verpackungsmaschine. Die Folie bewegt sich beim Auftrag der Substanz. Vorzugsweise erfolgt der Ausstoß der Substanz, beispielsweise durch ein Ventil, in Anhängigkeit der Folienbewegung. Dafür wird die Folienbewegung, insbesondere deren zurückgelegter Weg und/oder deren Geschwindigkeit erfasst. Vorzugsweise wird eine sich auf der Verpackungsmaschine befindliche Rolle mit Verpackungsmaterial abgerollt und beim Abrollen, insbesondere, wenn sich die Folie entlang einer im Wesentlichen horizontalen Bahn bewegt wird, mit der Substanz bedruckt.

Vorzugsweise ist die Substanz lösemittelhaltig. Besonders bevorzugt handelt es sich bei dem Lösemittel um Methyl-Ethyl-Keton (MEK). Vorzugsweise beträgt der Lösemittelanteil der Substanz 80 - 90 Gew.-%, besonders bevorzugt 83 - 86 Gew.-%. Vorzugsweise ist dieses Lösemittel nahezu vollständig, vorzugsweise >95%, insbesondere >99% verdampft/verdunstet, bevor die Verpackung geschlossen wird, insbesondere bevor der mit der Substanz bedruckte Bereich die Siegelstation erreicht. Das Verdampfen/Verdunsten des Lösemittels kann aber auch noch durch die Evakuierung der Verpackung verbessert werden.

Vorzugsweise ist die aufzutragende Substanz nicht elektrisch leitend, besonders bevorzugt weist sie kein Leitsalz auf, insbesondere um Verkrustungen an dem Ausstoßorgan zu vermeiden.

Vorzugsweis wird die Substanz während des gesamten Bedruckungsverfahrens, insbesondere auch beim Transportieren der Substanz von einem Vorratsbehälter zu einem Ausstoßorgan, beispielsweise einer Düse, vor ultravioletter Strahlung geschützt.

Bei der Düse handelt es sich vorzugsweise um eine Teflondüse oder um eine Düse die vorzugsweise mit Teflon beschichtet ist.

Vorzugsweise weist die Düse einen Druckluftanschluss auf, der die Gaskonzentrationsindikatorsubstanz zerstäubt, wobei besonders bevorzugt die Düse so ausgebildet ist, dass die Mischung zwischen der Gaskonzentrationsindikatorsubstanz und der Luft erst stromabwärts von der Düse erfolgt.

Vorzugsweise beträgt der Abstand zwischen der Düse und der Folie 3 - 4 cm, besonders bevorzugt weniger als 3 cm.

Vorzugsweise weist die Düse eine Nadel auf, die sie öffnet und schließt. Besonders bevorzugt wird die Position der Nadel mit der Druckluft gesteuert. Vorzugsweise befindet sich das Ventil für die Druckluftsteuerung weniger als <15 mm, vorzugsweise <10 mm entfernt von dem Nadelsitz, damit das System möglichst schnell reagiert. Da die Nadel verschleißt, muss sie ausgetaucht werden. Die Notwendigkeit eines Austauschs wird anhand des Druckbilds ermittelt.

Für den Fall, dass eine bereits bedruckte Folie verwendet wird, ist diese zumindest zeitweise vor UV-Strahlung geschützt, beispielsweise mit einer UV-dichten Umhüllung versehen, beispielsweise während des Transports.

Ein weiterer Gegenstand der vorliegenden Erfindung ist ein Verfahren, bei dem das Messen mindestens eines Bestandteils der Atmosphäre in der Verpackung zumindest teilweise erfolgt, während sich die jeweilige Verpackung und/oder das Verpackungsmaterial bewegt. Vorzugsweise werden die Verpackungen durch das Verpackungsmaterial, beispielsweise die Unter- und/oder die Oberfolie bewegt. Bei dieser Bewegung erfolgt die Messung. Vorzugsweise beträgt die Relativgeschwindigkeit zwischen dem Sensor und der Verpackung 1 - 2 m/s, insbesondere 1,2 - 1,6 m/s.

Die zu diesem Gegenstand der vorliegenden Erfindung gemachten Ausführungen gelten für die anderen Gegenstände der vorliegenden Erfindung gleichermaßen und umgekehrt.

Gemäß einem weiteren oder bevorzugten Gegenstand der vorliegenden Erfindung erfolgt die Messung nicht permanent, sondern beispielsweise nur, wenn sich die Gaskonzentrationsindikatorsubstanz, insbesondere der Gaskonzentrationsindikatorsubstanzpunkt im Erfassungsbereich des Sensors befindet, d.h. wenn der Sensor die von der Gaskonzentrationsindikatorsubstanz abgegebene Strahlung empfangen kann.

Die zu diesem Gegenstand der vorliegenden Erfindung gemachten Ausführungen gelten für die anderen Gegenstände der vorliegenden Erfindung gleichermaßen und umgekehrt.

Vorzugsweise wird die Verpackungsdimension in Transportrichtung und die Lage der Gaskonzentrationsindikatorsubstanz innerhalb dieser Verpackung, insbesondere bezogen auf die Transportrichtung gemessen und/oder eingegeben. Vorzugsweise wird die Weg-/Zeit-Beziehung des Transports mindestens einer Verpackung entlang der Verpackungsmaschine eines Formats gemessen, eingegeben und/oder berechnet. Mit zumindest einem Teil dieser Daten wird ein Fenster, insbesondere ein Zeitfenster, ermittelt, innerhalb dessen sich die Gaskonzentrationsindikatorsubstanz im Erfassungsbereich eines insbesondere stationären Sensors befindet. Vorzugsweise erfolgt die Messung nur in diesem Fenster, insbesondere Zeitfenster. Vorzugsweise wird nur der Zeitpunkt erfasst, bei dem sich der Anfangsbereich des Gaskonzentrationsindikatorsubstanzpunkts im Erfassungsbereich des Sensors befindet. Sobald dieser sich im Erfassungsbereich des Sensors befindet wird eine, insbesondere bestimmte, Anzahl von Messungen, mindestens jedoch eine Messung durchgeführt und aus diesen Messungen der Messwert ermittelt.

Gemäß einem weiteren bevorzugten Gegenstand der vorliegenden Erfindung wird jede Substanz mehrfach, insbesondere an unterschiedlichen Stellen analysiert. Der Sensor untersucht folglich jeden Gaskonzentrationsindikatorsubstanzpunkt mehrfach, vorzugsweise 10 - 30 fach, insbesondere während er sich entlang des Sensors bewegt. Dadurch erfolgt die Messung an unterschiedlichen Stellen des Gaskonzentrationsindikatorsubstanzpunkts.

Die zu diesem Gegenstand der vorliegenden Erfindung gemachten Ausführungen gelten für die anderen Gegenstände der vorliegenden Erfindung gleichermaßen und umgekehrt.

Vorzugsweise wird mit der eigentlichen Bestimmung des Messwertes gewartet, bis der jeweils ermittelte Messwert innerhalb eines Toleranzbereichs liegt und/oder vorzugsweise in wesentlichen konstant ist. Erst dann wird mindestens ein vorzugsweise mehrere Messwerte ermittelt und diese Messwerte prozessiert, indem beispielsweise deren arithmetischer Mittelwert gebildet wird.

Noch ein weiterer bevorzugter Gegenstand der vorliegenden Erfindung ist ein Verfahren zur Herstellung von Verpackungen, wobei die Verpackungsmulden formatweise intermittierend, d.h. taktweise entlang der Verpackungsmaschine transportiert werden, wobei bei mehreren, vorzugsweise allen Verpackungen eines Formates die Konzentration mindestens einer Substanz in der Gasphase bestimmt wird, bei dem die Reihenfolge in welcher die Verpackungen analysiert werden wählbar ist.

Die zu diesem Gegenstand der vorliegenden Erfindung gemachten Ausführungen gelten für die anderen Gegenstände der vorliegenden Erfindung gleichermaßen und umgekehrt. Bei dem voliegenden Verfahren wird die Konzentration mindestens einer Komponente der Gasphase in der Verpackung eines Formates an Verpackungen analysiert. Ein Format im Sinne der Erfindungen ist die Anzahl an Verpackungen, die bei einem Vorzug der Verpackungsmaschine von einer Bearbeitungsstation zur nächsten weitertransportiert werden. Ein Format besteht aus mindestens zwei Verpackungen in mindestens einer, vorzugsweise mehreren Zeilen und mindestens einer, vorzugsweise mehreren Reihen.

Die Reihenfolge kann beispielsweise bei einem Formatwechsel geändert werden.

Vorzugsweise wird die Verpackung, die nach der Evakuierung und/oder Begasung der Verpackung am weitesten von dem gewünschten Sollwert abweicht als erstes analysiert. Als nächstes folgt vorzugsweise die Verpackung die etwas weniger vom Sollwert abweicht und in dieser Reihenfolge wird besonders bevorzugt so weiterverfahren. Sollten bereits die erste(n) Messung(en) die Einhaltung der Sollwerte zeigen, kann gemäß einer besonders bevorzugten Ausführungsform auf die restlichen Messungen eines Formates verzichtet werden.

Vorzugsweise wird die Gaskonzentrationsindikatorsubstanz nach Fertigstellung der Verpackung und/oder nach erfolgter Messung deaktiviert, also beispielsweise für weitere Messungen unbrauchbar gemacht. Dies kann beispielsweise durch UV-Bestrahlung erfolgen. Vorzugsweise werden die Druckparameter, beispielsweise Zerstäuberluftdruck, Öffnungszeit der Düse, Druck der Substanz, Abstand Düse/Folie und/oder die Position der Düse in einem Rezept für ein bestimmtes Produkt hinterlegt. Bei einem Produktwechsel kann dann die Einstellung der Druckparameter automatisch erfolgen.

Des Weiteren wird ein Verfahren zur Dichtigkeitsprüfung einer Verpackung beschrieben, wobei die Verpackung unter Druck gesetzt und ihr Verformungsverhalten analysiert wird.

Bei dem vorliegenden Verfahren wird der Druck im Inneren der Verpackung und/oder deren Umgebungsdruck reversibel, insbesondere vergleichsweise kurzzeitig verändert und mit einem Sensor ermittelt, wie sich die Verpackung dabei verformt und/oder wenn die Druckveränderung wieder aufgehoben wird und der innere und/oder äußere Druck wieder den ursprünglichen Wert angenommen hat/haben, wie sich die Verpackung rückformt. Dabei kann auch die Zeit, in der rückformt, insbesondere vollständig rückformt, alternativ oder zusätzlich in Betracht gezogen werden. Die Veränderung der Form kann beispielsweise durch eine oder mehrere Lichtschranke(n) und/oder mittels Kamera gemessen werden. Der Kamera ist eine Bildanalyse Technik angeschlossen, mit der beispielsweise erkannt werden kann wie sich die Form der Verpackung in welcher Zeit ändert.

Bei einer bevorzugten Ausführungsform weist eine Verpackungsmaschine eine Siegelstation auf, die eine Oberfolie auf eine Verpackungsmulde siegelt, wobei stromabwärts von Siegelstation und einem Sensor, der eine Konzentration einer Substanz der Gasphase in der Verpackung misst, ein Mittel zur Erhöhung des Drucks in der Verpackung und/oder zur Veränderung des Drucks in deren Umgebung und ein weiterer Sensor, der dieselbe Konzentration einer Substanz in der Gasphase in der Verpackung misst, vorgesehen ist und wobei das Mittel zur Erhöhung des Drucks eine Walze und/oder Teil eines Labellers und/oder eine Unterdruckkammer und/oder andere bewegte Maschinenteile, die Prinzip bedingt auf die Verpackung wirken, ist/sind.

Die zu dieser Verpackungsmaschine gemachten Ausführungen gelten für die anderen Verpackungsmaschinen gleichermaßen und umgekehrt. Bei der vorliegenden Verpackungsmaschine kann es sich um einen sogenannten Thermoformer oder um einen sogenannten Traysealer handeln. Die Verpackungsmaschine weist eine Siegelstation auf, mit der eine Oberfolie auf die Verpackungsmulde gesiegelt wird, nachdem diese mit einem Verpackungsgut, insbesondere einem Lebensmittel befüllt worden ist. Die Verpackungsmaschine weist einen ersten Sensor auf, der eine Konzentration einer Substanz, insbesondere die Sauerstoffkonzentration der veränderten Gasphase in der Verpackung misst. Danach wird der Druck in der Verpackung erhöht und/oder reduziert und/oder in deren Umgebung verändert. Sollte die Verpackung undicht sein, wird sie dabei atmen und sich dadurch die Zusammensetzung der Gasphase verändern, was mit dem zweiten Sensor ermittelt wird. Vorzugsweise sind die beiden Sensoren baugleich vorgesehen oder es handelt sich um ein und denselben Sensor, der Verpackungen an unterschiedlichen Orten innerhalb der Verpackungsmaschine analysieren kann.

Vorzugsweise handelt es sich bei dem Mittel, das den Druck in der Verpackung insbesondere kurzzeitig und reversibel erhöht, um eine Walze oder mehrere Walzen, die die Verpackung zumindest lokal allein und/oder im Zusammenspiel miteinander etwas zusammendrückt.

Alternativ oder zusätzlich ist das Mittel Teil eines sogenannten Labellers, der an den Verpackungen Etiketten anbringt. Diese Etiketten, werden mit sogenannten Absetzstempeln auf die Verpackung gedrückt. Diese Absetzstempel können beispielsweise dazu eingesetzt werden den Druck in der Verpackung kurzzeitig sowie reversibel zu erhöhen. Der zweite Sensor ist bei dieser Ausführungsform der Verpackungsmaschine stromabwärts von dem Labeller vorgesehen.

Alternativ oder zusätzlich ist das Mittel eine Druck- insbesondere Unterdruckkammer, durch die jede Verpackung geführt wird. Ist die Verpackung undicht, verändert sich durch den Druck, insbesondere den Unterdruck, die Zusammensetzung des Gases in der Verpackung und/oder der Druck in der Unterdruckkammer.

Vorzugsweise weist die Verpackungsmaschine für jede Verpackung einen separaten Sensor oder mehrere Sensoren pro Verpackung auf. Es ist aber auch möglich, dass ein Sensor mehrere Verpackungen eines Formates zugeordnet wird, beispielsweis einem gesamten Format oder einer Reihe oder einer Spalte eines Formates. Für den Fall einer Abweichung eines Messwertes werden die betroffenen Verpackungen dann beispielsweise einzeln nachanalysiert und nur die "Schlechtpackungen" aussortiert oder alle aussortiert.

Bei einer weiteren Ausführungsform weist eine Verpackungsmaschine einen Temperatursensor auf, der die Temperatur des Gaskonzentrationsindikatorsubstanzpunkts und/oder der Verpackungsmulde und/oder der Oberfolie und/oder der Atmosphäre in der Verpackung und/oder eines Verpackungsguts misst. Alternativ oder zusätzlich kann die Verpackungsmaschine noch einen Drucksensor aufweisen, der den Druck in der Verpackung misst.

Die zu dieser Verpackungsmaschinen gemachten Ausführungen gelten für die anderen Verpackungsmaschinen gleichermaßen und umgekehrt.

Bei einer weiteren Ausführungsform weist eine Verpackungsmaschine eine Abdeckung auf, die jeden Sensor, der elektromagnetische Wellen empfängt vor elektromagnetischer Störstrahlung schützt.

Die zu Verpackungsmaschine gemachten Ausführungen gelten für die anderen Verpackungsmaschinen gleichermaßen und umgekehrt.

Besonders bevorzugt weisen diese Sensoren keine Filter für elektromagnetische Wellen auf.

Vorzugsweise ist der Temperatur- und/oder Drucksensor Teil des Sensors, der einen Bestandteil der Atmosphäre misst. Besonders bevorzugt ist der Temperatursensor ein Infrarotsensor.

Vorzugsweise ist an der Verpackungsmaschine ein Behälter vorgesehen, der die Gaskonzentrationsindikatorsubstanz aufnimmt. Dieser Behälter ist über eine Flüssigkeitsleitung mit mindestens einem Ausstoßorgan, beispielsweise einem Ventil verbunden, aus dem die Substanz austritt und auf die Verpackungsfolie aufgetragen wird. Die Leitungen und/oder der Behälter sind vorzugsweise aus einem inerten Material und/oder aus einem Material mit einer nicht oder nur geringfügig benetzbaren Oberfläche, beispielsweise Teflon, gefertigt. Besonders bevorzugt weist die Leitung einen UV-LichtSchutz auf, beispielsweise einen UV-Licht-undurchlässigen Überzug.

Vorzugsweise wird der Behälter mittels Nachfüllbehältern nachgefüllt, wobei die Substanz vorzugsweise mittels Schwerkraft von dem Nachfüllbehälter in den Behälter läuft oder der Nachfüllbehälter den Behälter ersetzt, beispielsweise wie es bei Tintenpatronen üblich ist.

Das System zum Aufbringen der Gaskonzentrationsindikatorsubstanz muss vorzugsweise nur bei Inbetriebnahme entlüftet werden.

Besonders bevorzugt weist der Nachfüllbehälter eine Identifikation, beispielsweise ein RFID-Tag auf, die von der Verpackungsmaschine lesbar ist. Vorzugsweise enthält die Identifikation beispielsweise Informationen über den Inhalt des Nachfüllbehälters, den Hersteller und/oder das Herstelldatum. Vorzugsweise kann die Verpackungsmaschine nur dann in Betrieb genommen werden, wenn die ausgelesene Identifikation richtig ist.

Vorzugsweise weist der Behälter eine Füllstandsmessung/anzeige auf. Besonders bevorzugt weist die Verpackungsmaschine den Werker automatisch darauf hin, wenn die Substanz nachgefüllt werden muss. Mit der Füllstandsmessung wird der Verbrauch an Substanz ermittelt und vorzugsweise überprüft, ob der Verbrauch plausibel ist. Insbesondere, wenn er zu hoch ist, wird die Bedruckung und/oder die gesamte Verpackungsmaschine abgeschaltet und ganz besonders bevorzugt der Vorratsbehälter für die Substanz entspannt und/oder die Ventile blockiert.

Vorzugsweise steht der Behälter unter Druck, durch den die Substanz durch die Leitungen zu dem Ausstoßorgan fördert.

Vorzugsweise werden mehrere Substanzen gleichzeitig, sowie parallel an unterschiedlichen Stellen aufgebracht. Vorzugsweise entspricht die Anzahl der Ausstoßorgane der Anzahl der Reihen, die ein Format aufweist und die parallel zur Transportrichtung der Folienbahn entlang der Verpackungsmaschine transportiert werden.

Das Verpackungsmaterial, insbesondere die Folienbahnen werden entlang der Verpackungsmaschine, insbesondere taktweise transportiert. Dafür weist die Verpackungsmaschine einen Antriebsmotor auf. Vorzugsweise aktivieren der Antriebsmotor und/oder ein Vorfertigsignal den Sensor. Sobald der nächste Folienvorschub erfolgt und/oder geplant ist, wird der Sensor aktiviert und kann folglich die sich an ihm vorbeibewegende Substanz analysieren.

Vorzugsweise wird jeder Sensor an einem gemeinsamen Querträger beweglich jedoch fixierbar montiert, so dass die Position des Sensors quer zur Transportrichtung der Verpackungsfolie eingestellt, d.h. an ein verändertes Format angepasst werden kann. Vorzugsweise ist der Querträger insgesamt demontierbar vorgesehen, damit er beispielsweise für die Reinigung der Verpackungsmaschine abgenommen werden kann. Vorzugsweise ist jeder Sensor und/oder jedes Ausstoßorgan mit einem motorischen Antrieb versehen, so dass seine Positionierung beispielsweise bei einer Formatänderung automatisch erfolgen kann. Mit dieser erfindungsgemäßen oder bevorzugten Ausführungsform kann auch ein Verzug einer Folienbahn ausgeglichen werden. Vorzugsweise wird der Gaskonzentrationsindikatorsubstanzpunkt an einer Stelle der Verpackung angeordnet, an der sich kein Produkt befindet. Der Sensor sieht vorzugsweise demnach kein Produkt.

Für den Fall, dass die Sensoren beim Reinigen an der Verpackungsmaschine verbleiben, werden sie vorzugsweise abgedeckt, beispielsweise von einer einschwenkbaren und/oder einschiebbaren / aufsteckbaren Schutzabdeckung geschützt.

Bei einer Ausführungsform weist eine Verpackung eine Verpackungsmulde mit einem Aufnahmeraum für ein Verpackungsgut auf, an die eine Deckelfolie gesiegelt ist und die einen Gaskonzentrationsindikatorsubstanzpunkt aufweist, wobei der Gaskonzentrationsindikatorsubstanzpunkt in einer Einbuchtung vorgesehen ist.

Die zu dieser Verpackung gemachten Ausführungen gelten für die anderen Verpackungen gleichermaßen und umgekehrt.

Bei der vorliegenden Ausführungsform weist eine Verpackung feine Verpackungsmulde auf, die in der Regel aus einer tiefgezogenen Kunststofffolie besteht. Diese Verpackungsmulden weisen einen Boden, eine Seitenwand und in der Regel einen Randbereich auf, an den eine Deckelfolie gesiegelt wird. Die Verpackungsmulden haben oftmals einen im Wesentlichen rechteckigen, runden oder ovalen Querschnitt, können aber auch einen beispielsweise viertel- oder halbkreisförmigen oder sonstigen Querschnitt aufweisen. In der Verpackungsmulde wird ein Aufnahmeraum für das Verpackungsgut zur Verfügung gestellt, der das Produkt vollständig oder teilweise aufnehmen kann. Das Verpackungsgut kann demnach auch über die Verpackungsmulde hinausstehen. In diesem Fall ist die Oberfolie vorzugsweise dann nicht eben, sondern ebenfalls dreidimensional geformt vorgesehen. Das Verpackungsgut ist vorzugsweise ein Lebensmittel, insbesondere ein proteinhaltiges Lebensmittel.

Vorzugsweise ist in der Verpackung ein Gaskonzentrationsindikatorsubstanzpunkt vorgesehen, mit dem zerstörungsfrei die Konzentration einer oder mehrerer Gaskomponenten in der Verpackungsmulde bestimmt werden kann. Weiterhin erfindungsgemäß ist dieser Gaskonzentrationsindikatorsubstanzpunkt in einer Einbuchtung vorgesehen, die zumindest zeitweise Kontakt mit dem Gasraum in der Verpackungsmulde hat. Vorzugsweise ist die Einbuchtung so gestaltet bzw. so in der Verpackungsmulde angeordnet, dass der Gaskonzentrationsindikatorsubstanzpunkt von dem Verpackungsgut nicht kontaminiert wird, trotzdem aber die Konzentration der Substanz(en) in der Gasphase der Verpackungsmulde richtig anzeigt. Die Einbuchtung kann im Boden und/oder in der Seitenwand der Verpackungsmulde und/oder in der Deckelfolie vorgesehen sein. Vorzugsweise ist sie so vorgesehen, dass eine in der Verpackung vorhandene Flüssigkeit nicht in die Einbuchtung hineinläuft und/oder durch Gravitation sicher wieder abläuft, wenn sich die Verpackung in ihrer vorgesehenen Stellung, insbesondere Verkaufsstellung befindet. Die Einbuchtung ist vorzugsweise tiefgezogen.

Vorzugsweise ist der Gaskonzentrationsindikatorsubstanzpunkt bereits auf die Folie, aus der die Verpackungsmulde hergestellt wird und/oder die Oberfolie aufgedruckt oder als eine Schicht der entsprechenden Folie vorgesehen. Sofern der Gaskonzentrationsindikatorsubstanzpunkt als eine diskrete Stelle auf der entsprechenden Folie vorgesehen ist, wird die entsprechende Einbuchtung genau an der Stelle vorgesehen.

Vorzugsweise ist die Einbuchtung geschlossen. In diesem Fall ist der Gaskonzentrationsindikatorsubstanzpunkt isoliert und zeigt die Gaskonzentration an, die sich zum Zeitpunkt des Schließens in der Einbuchtung und damit in der Verpackungsmulde befand. Bei dieser bevorzugten Ausführungsform der erfindungsgemäßen Verpackung wird also von dem Gaskonzentrationsindikatorsubstanzpunkt beispielsweise die Konzentration einer Komponente in der Gasphase angezeigt, die zum Zeitpunkt des Verpackens in der Verpackung herrschte.

Vorzugsweise sind die Einbuchtung und der Aufnahmeraum durch einen Kanal oder mehrere Kanäle miteinander verbunden. Bei mindestens zwei Kanälen sind diese vorzugsweise so vorgesehen, dass das Gas in der Verpackungsmulde an dem Gaskonzentrationsindikatorsubstanzpunkt vorbeiströmen kann.

Bei einer weiteren bevorzugten Ausführungsform weist eine Verpackung eine Verpackungsmulde auf, wobei die Verpackungsmulde eine Seitenwand aufweist und der Gaskonzentrationsindikatorsubstanzpunkt an der Seitenwand der Verpackungsmulde vorgesehen ist.

Die zu dieser Verpackung gemachten Ausführungen gelten für die anderen Verpackungen gleichermaßen und umgekehrt.

Diese bevorzugte Ausführungsform hat den Vorteil, dass eine eventuell vorhandene Flüssigkeit in der Verpackung entweder erst gar nicht zu dem Gaskonzentrationsindikatorsubstanzpunkt gelangt und/oder von diesem wieder abläuft, sollte es zu einer Berührung kommen. Vorzugsweise wird die Folienbahn, aus der die Verpackungsmulde geformt wird, so vorgesehen, dass der Gaskonzentrationsindikatorsubstanzpunkt sich bereits bei deren Herstellung in dem Bereich befindet, der später die Seitenwand bildet. Der Gaskonzentrationsindikatorsubstanzpunkt kann aber auch nach dem Tiefziehen der Verpackungsmulde an der Seitenwand, beispielsweise durch Drucken, Kleben und/oder Siegeln, insbesondere jedoch stoffschlüssig vorgesehen werden. Gemäß einer bevorzugten Ausführungsform befindet sich der Gaskonzentrationsindikatorsubstanzpunkt in einer Einbuchtung in der Seitenwand.

Bei einer weiteren bevorzugten Ausführungsform weist eine Verpackung eine mit einem Piktogramm und/oder Logo und/oder einem geometrischen Gebilde bedruckte Unterfolie und/oder Oberfolie und einen Gaskonzentrationsindikatorsubstanzpunkt auf, der Teil eines Piktogramms und/oder eines Logos und/oder eines geometrischen Gebildes ist.

Die zu dieser Verpackung gemachten Ausführungen gelten für die anderen Verpackungen gleichermaßen und umgekehrt.

Diese vorliegende Ausführungsform betrifft wiederum eine Verpackung, die eine bedruckte Ober- und/der Unterfolie aufweist. Der Gaskonzentrationsindikatorsubstanzpunkt ist nun Teil des Druckbildes. Dadurch wird zum einen Druckfarbe eingespart und zum anderen der Benutzer nicht durch den Gaskonzentrationsindikatorsubstanzpunkt irritiert.

Bei einer weiteren bevorzugten Ausführungsform weist eine Verpackung eine Gaskonzentrationsindikatorsubstanz auf, die Teil der Siegelschicht der Unterfolie und/oder der Oberfolie ist.

Die zu dieser Verpackung gemachten Ausführungen gelten für die anderen Verpackungen gleichermaßen und umgekehrt.

Bei dieser vorliegenden Ausführungsform ist die Siegelschicht der Unter- und/oder Oberfolie mit einer Gaskonzentrationsindikatorsubstanz versehen, und damit mit dem Gasraum der Verpackung im unmittelbaren Kontakt. Dies kann lokal, groß- und/oder ganzflächig erfolgen.

Bei einer bevorzugten Ausführungsform einer Verpackung ist die Gaskonzentrationsindikatorsubstanz groß-, insbesondere vollflächig, in und/oder auf der Unterfolie und/oder der Oberfolie vorgesehen Die zu dieser Verpackung gemachten Ausführungen gelten für die anderen Verpackungen gleichermaßen und umgekehrt.

Bei dieser Ausführungsform ist die Gaskonzentrationsindikatorsubstanz großflächig vorgesehen. Diese Ausführungsform hat den Vorteil, dass lokale Gaskonzentrationsunterschiede in der Verpackung erkannt werden können.

Vorzugsweise ist der Gaskonzentrationsindikatorsubstanzpunkt zumindest teilweise deckungsgleich mit einem unbedruckten Abschnitt der Verpackung vorgesehen.

Die zu dieser Verpackung gemachten Ausführungen gelten für die anderen Verpackungen gleichermaßen und umgekehrt.

Diese Ausführungsform hat den Vorteil, dass der Gaskonzentrationsindikatorsubstanzpunkt mit einem entsprechenden Sensor, der außerhalb der Verpackung vorgesehen ist, analysiert werden kann.

Gemäß einer weiteren bevorzugten Ausführungsform ist der Gaskonzentrationsindikatorsubstanzpunkt zumindest teilweise deckungsgleich mit einem bedruckten und/oder eingetrübten Abschnitt der Verpackung vorgesehen.

Die zu dieser Verpackung gemachten Ausführungen gelten für die anderen Verpackungen gleichermaßen und umgekehrt.

Diese Ausführungsform hat den Vorteil, dass der Gaskonzentrationsindikatorsubstanzpunkt mit einem entsprechenden Sensor, der außerhalb der Verpackung vorgesehen ist und der durch die Bedruckung hindurch detektieren kann, analysiert werden kann und der Benutzer nicht durch den Gaskonzentrationsindikatorsubstanzpunkt irritiert wird.

Bei einer weiteren bevorzugten Ausführungsform ändert die Verpackung unter Druck reversibel ihre Form Die zu dieser Verpackung gemachten Ausführungen gelten für die anderen Verpackungen gleichermaßen und umgekehrt.

Bei dieser vorliegenden Ausführungsform wird eine Verpackung mit einem Innen- und/oder Außendruck temporär sowie lokal oder vollständig beaufschlagt. Dabei ist die Verpackung so vorgesehen, dass sie ihre Form ändert und dass sich diese Änderung zurückbildet, sobald sie dem Druck nicht mehr ausgesetzt ist. Die Formveränderung unter Druck und/oder die Rückbildung wird dabei von einem Sensor erfasst und analysiert, wobei das Maß der Veränderung, das Maß der Rückbildung und/oder die Zeit, in der die Verformung und/oder Rückformung erfolgt gemessen werden kann. Die so gewonnenen Daten erlauben Rückschlüsse darüber, ob die Verpackung dicht ist oder nicht.

Vorzugsweise weist die Verpackung mindestens ein Gestaltungselement, beispielsweise eine Membran auf, die sich in einer bestimmen Art und Weise verformt bzw. rückformt. Beispielsweise ist ein solches Element, ein Wippboden, der sich unter Druck in eine Richtung verformt und in seine ursprüngliche Stellung zurückspringt, sobald der Druck wieder entfernt wird, vorausgesetzt, dass die Verpackung dicht ist. Sollte dies nicht der Fall sein, wird der Wippboden in seiner Stellung unter Druck verbleiben.

Bei einer weiteren bevorzugten Ausführungsform weist eine Verpackung innenseitig einen Druck- und/oder Temperatursensor auf.

Die zu dieser Verpackung gemachten Ausführungen gelten für die anderen Verpackungen gleichermaßen und umgekehrt. Bei der vorliegenden Ausführungsform ist in der Verpackung ein Drucksensor vorhanden, der einen Druck, insbesondere einen gewissen Druck anzeigt. Beispielsweise handelt es sich bei dem Sensor um eine Mikrokapsel, die bei einem gewissen Druck platzt. Durch das Platzen kann erkannt werden, dass eine unter Druck gesetzte Verpackung dicht ist, weil ansonsten dieser Druck nicht erreicht würde.

Der Temperatursensor bestimmt die Temperatur innerhalb der Verpackung, insbesondere des Gaskonzentrationsindikatorsubstanzpunktes.

Des Weiteren ist ein tragbares elektronisches Bauteil, insbesondere Smartphone oder Tablett-PC, das einen Sensor aufweist, beschrieben, mit dem der Gaskonzentrationsindikatorsubstanzpunkt und/oder der Drucksensor auslesbar ist.

Die zu diesem tragbaren elektronischen Bauteil gemachten Ausführungen gelten für die anderen tragbaren elektronischen Bauteilen gleichermaßen und umgekehrt.

Mit dem Bauteil ist es möglich, beispielsweise in einem Ladengeschäft die Konzentration der jeweiligen Substanz in der Gasphase der Verpackung zu messen, um festzustellen, ob eine Verpackung beispielsweise nach ihrem Transport noch dicht ist.

Vorzugsweise weist das Bauteil einen Adapter auf, der zwischen dem Sensor und der Verpackung vorgesehen wird, so dass sich das Bauteil in der richtigen Position relativ zu der Verpackung befindet.

Noch ein weiterer bevorzugter Ausführungsform ist eine mehrlagige Verpackung, in der vorzugsweise eine Mehrzahl von unterschiedlichen Verpackungsgütern vorgesehen sind und/oder bei der jede Lage eine unterschiedliche Gaszusammensetzung aufweist. Diese Verpackung weist eine Vielzahl von Gaskonzentrationsindikatorsubstanzpunkten auf, insbesondere eine pro Lage, die vorzugweise alle von außen auslesbar sind.

Eine weitere bevorzugte Ausführungsform einer Verpackung betrifft Abdecken der Stelle der Verpackung, an der sich der Gaskonzentrationsindikatorsubstanzpunkt befindet und/oder des Sichtbereichs auf den Gaskonzentrationsindikatorsubstanzpunkt, mit Etikett, damit der Benutzer nicht von diesem Punkt irritiert wird. Sichtbereich meint beispielsweise, dass sich der Substanzpunkt an der Unterfolie befindet, das Etikett aber auf die Oberfolie aufgebracht wird, so dass die Sicht auf den Substanzpunkt verdeckt wird.

Eine weitere bevorzugte Ausführungsform einer Verpackung betrifft das Drucken des gemessenen Konzentrationswertes auf die Verpackung und/oder das Etikett, vorzugsweise in codierter Form, um eine detaillierte Qualitätsinformation nach späteren weiteren Produktionsschritten zu dokumentieren, bis hin zum Ladengeschäft oder sogar Endverbraucher.

Im Folgenden wird die Erfindung anhand der Figuren erläutert.

Erläuterungen gelten für alle Gegenstände der vorliegenden Erfindung gleichermaßen.
**Figur 1** zeigt eine Verpackungsmaschine
**Figuren 2 und 3** zeigt eine erste Ausführungsform einer Verpackung
**Figuren 4 bis 7** zeigen jeweils eine weitere Ausführungsform einer Verpackung

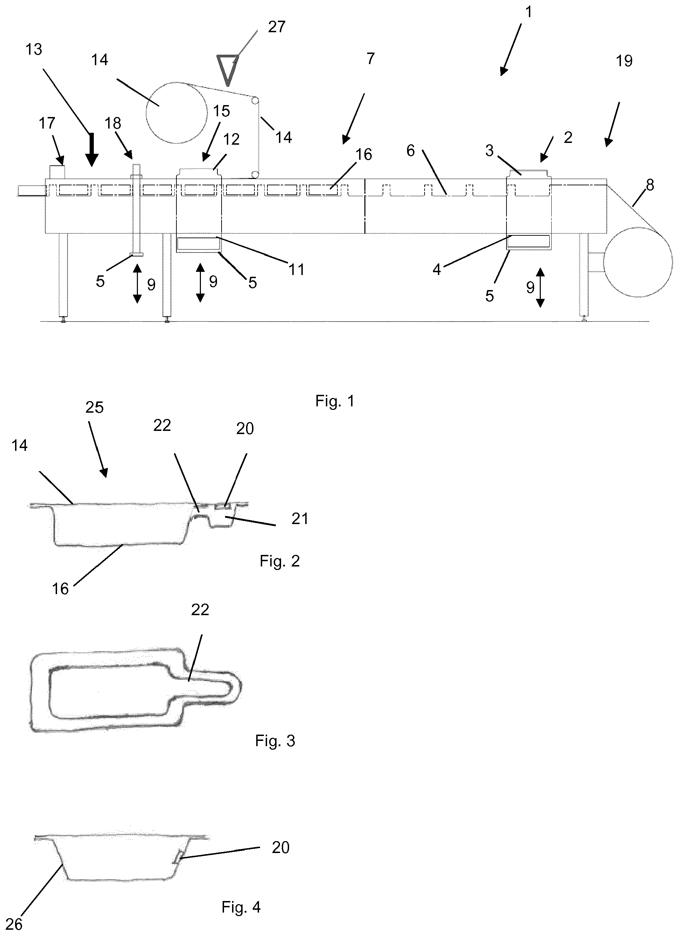

**Figur 1** zeigt eine Verpackungsmaschine 1, die eine Tiefziehstation 2, eine Füllstation 7 sowie eine Siegelstation 15 aufweist. Eine Kunststofffolienbahn 8, die sogenannte Unterfolienbahn, wird von einer Vorratsrolle abgezogen und, vorzugsweise taktweise, entlang der Verpackungsmaschine hier von rechts nach links transportiert. Bei einem Takt wird die Folienbahn um eine Formatlänge weitertransportiert. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils mit einer Kante der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können miteinander, vorzugsweise durch eine starre Welle, verbunden sein. Jedes Transportmittel weist eine Vielzahl von Klemmmitteln auf, die die Unterfolienbahn 8 im Einlaufbereich klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Unterfolienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 19, die ebenfalls aus einem Oberwerkzeug 12 und einem vertikal verstellbaren Unterwerkzeug 11 besteht, wird eine Oberfolienbahn auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolienbahn 14 kann tiefgezogen und/oder in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolienbahn gemacht wurden. In der Siegelstation findet vorzugsweise ein Gasaustausch statt, um beispielsweise den Sauerstoffgehalt der Atmosphäre in der Verpackung zu reduzieren. Im weiteren Verlauf der Verpackungsmaschine werden auch die fertiggestellten Verpackungen vereinzelt, was mit dem Schneidwerkzeugen 17, 18 erfolgt. Das Schneidwerkzeug 18 ist in dem vorliegenden Fall ebenfalls mit einer Hubeinrichtung 9 anhebbar bzw. absenkbar. Der Fachmann erkennt, dass bei einem Takt vorzugsweise mehrere Verpackungsmulden tiefgezogen, befüllt und verschlossen werden.

Die Verpackungsmaschine weist zumindest ein Messgerät, beispielsweise einen Sensor 13 auf, der einen Gaskonzentrationsindikatorsubstanzpunkt und/oder einen Druckindikator innerhalb der Verpackung ausliest und dadurch die Konzentration, beispielsweise die Sauerstoffkonzentration in der Verpackung ausliest oder das Vorhandenseins eines bestimmten Drucks feststellt. Mit dem Sensor kann aber auch das Verhalten der Verpackung unter einem temporären Druck analysiert werden. Vorzugsweise ist ein Sensor pro Packung oder ein Sensor für mehrere Packungen, beispielsweise für eine Reihe oder eine Spalte eines Formates oder für ein gesamtes Format vorhanden.

Die Verpackungsmaschine kann auch noch eine Druckstation aufweisen, mit der die Verpackung temporär unter Druck gesetzt wird und sofern die Verpackung undicht ist dabei atmet und/oder sich ihr Verformungs- bzw. Rückformungsverhalten ändert. Diese Veränderung wird in der Druckstation selbst oder mit einem stromabwärts davon vorhandenen Sensor erfasst und ausgewertet. Die undichten "Schlechtpackungen" werden aussortiert.

**Figuren 2 und 3** zeigt eine erste Ausführungsform einer Verpackung, die eine Verpackungsmulde 16 aufweist, in der sich ein Verpackungsgut befindet (nicht dargestellt) und die mit einer Deckelfolie 14 verschlossen ist. Ein Gaskonzentrationsindikatorsubstanzpunkt 21 ist in dem vorliegenden Fall in einer Einbuchtung 21 vorgesehen, die mittels eines Kanals 22 mit dem Gasraum der Verpackungsmulde verbunden ist und so beispielsweise die vorhandene Sauerstoffkonzentration anzeigt. Dieser Kanal 22 kann vor oder nach der Fertigstellung der Verpackung verschlossen werden, um einen einmal gemessenen Wert zu konservieren. Für den Fall, dass zwei Gaskonzentrationsindikatorsubstanzpunkt in der Verpackung vorhanden sind, kann der konservierte Wert vorzugsweise als Referenzwert herangezogen werden, um nachzuweisen, dass sich die Konzentration der Komponente im Gas nicht verändert hat.

Bei der Ausführungsform gemäß **Figur** 3 ist der Gaskonzentrationsindikatorsubstanzpunkt 20 an der Seitenwand der Verpackungsmulde 16 angeordnet. Dadurch kommt er mit einer eventuell in der Verpackung vorhandenen Flüssigkeit nicht in Berührung, wenn sich die Verpackung in der in der Figur dargestellten Verkaufsstellung befindet.

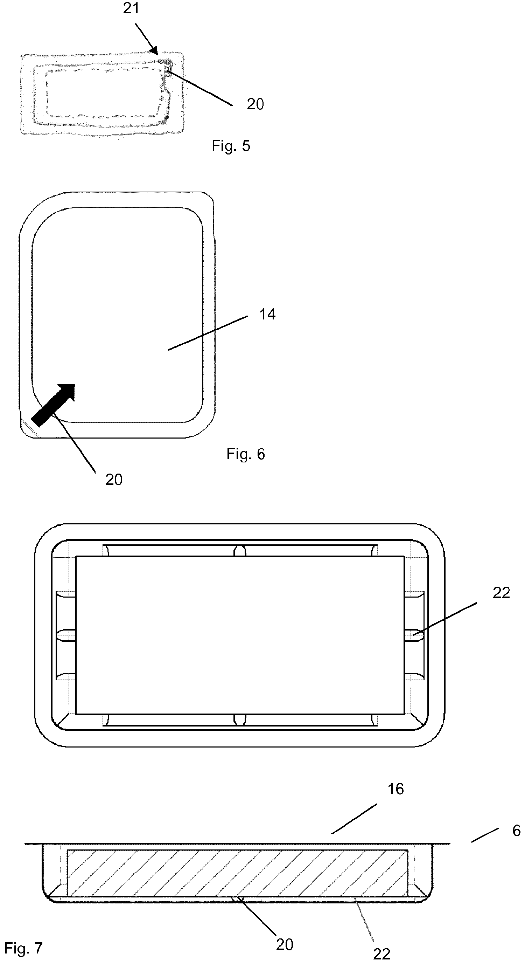

**Figur 5** zeigt noch eine weitere Ausführungsform feiner Verpackung, wobei auf die Ausführungen zu **Figur 4** Bezug genommen wird. In dem vorliegenden ist der Gaskonzentrationsindikatorsubstanzpunkt in einer Ausbuchtung in der Seitenwand vorgesehen.

**Figur 6** zeigt noch eine Ausführungsform einer Verpackung. In dem vorliegenden Fall ist der Gaskonzentrationsindikatorsubstanzpunkt 20 als geometrisches Objekt, nämlich als Pfeil gestaltet, der dem Benutzer zeigt, wie er ausgehend von einer Ecklasche die Verpackung öffnen soll. Hier hat also der Gaskonzentrationsindikatorsubstanzpunkt 20 zwei Funktionen. Seine Farbe zeigt eine Konzentration eines Gases in der Verpackung an und gleichzeitig fungiert er als Instruktion zum Öffnen der Verpackung.

**Figur 7** zeigt noch eine Ausführungsform feiner Verpackung. In dem vorliegenden Fall ist der Gaskonzentrationsindikatorsubstanzpunkt unterhalb des Verpackungsguts 16 vorgesehen und durch einen oder mehrere Kanäle 22 mit dem Gasraum um das Verpackungsgut herum verbunden, um die Konzentration einer Komponente der Gasphase anzuzeigen.

Vorzugsweise wird die gemessene Konzentration auf der Verpackung, beispielsweise auf dem Etikett festgehalten. Dies kann beispielsweise in verschlüsselter Form erfolgen.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel-, Tiefziehstation und/oder der Schneideinrichtung
- 6: Verpackungsmulde
- 7: Füllstation
- 8: Unterfolienbahn
- 9: Hubeinrichtung
- 10: fertiggestellte Verpackung
- 11: Unterwerkzeug der Siegelstation
- 12: Oberwerkzeug der Siegelstation
- 13: Sensor, Sauerstoffsensor
- 14: Oberfolie
- 15: Siegelstation
- 16: Verpackungsgut
- 17: Längsschneider
- 18: Querschneider
- 19: Einlaufbereich
- 20: Gaskonzentrationsindikatorsubstanzpunkt, Sauerstoffkonzentrationsindikatorsubstanzpunkt
- 21: Einbuchtung
- 22: Kanal
- 23: Aufnahmeraum
- 24: Druckerhöhungsmittel
- 25: Verpackung
- 26: Seitenwand der Verpackungsmulde
- 27: Ausstoßorgan, Düse

## Patentansprüche

1. Verfahren zur Herstellung einer Verpackung (10) mit einer geänderten Atmosphäre, bei der eine Oberfolie (14) an eine Verpackungsmulde (6) gesiegelt wird, wobei:
- vor der Siegelung in der Verpackungsmulde zunächst ein Unterdruck erzeugt und danach ein Austauschgas in die Verpackungsmulde eingeleitet wird oder
- die in der Verpackungsmulde befindliche Atmosphäre mit dem Austauschgas aus der Verpackung gespült wird oder
- lediglich einen Unterdruck in der Verpackung erzeugen wird und bei der nach und/oder stromabwärts von der Siegelung eine Messung der Konzentration mindestens eines Bestandteils der geänderten Atmosphäre und/oder deren Druck mit einem Sensor (13) erfolgt, **dadurch gekennzeichnet, dass** das Signal des Sensors (13) zur Ermittlung des Sollunterdrucks und/oder des Solldrucks nach Einführung des Austauschgases und/oder der Sollmenge an Austauschgas eingesetzt wird.

2. Verfahren nach Anspruch 1, **dadurch gekennzeichnet, dass** die Verpackung einen Gaskonzentrationsindikatorsubstanzpunkt aufweist, der mit der Atmosphäre der Verpackung in Kontakt steht, wobei dieser Kontakt vor dem Fertigstellen der Verpackung geschlossen wird, und wobei ein Gaskonzentrationsindikatorsubstanzpunkt eine Substanz aufweist, bei der sich eine chemische und/oder physikalische Eigenschaft mit der Konzentration eines Gases verändert.

3. Verfahren nach Anspruch 1 oder 2, **dadurch gekennzeichnet, dass** die Messung der Konzentration mindestens eines Bestandteils der geänderten Atmosphäre mit einem Gaskonzentrationsindikatorsubstanzpunkt (20) erfolgt, der nach der Messung abgetrennt wird.

4. Verfahren nach einem der Ansprüche 1 - 3, **dadurch gekennzeichnet, dass** die Verpackung einen Gaskonzentrationsindikatorsubstanzpunkt (20) aufweist, der mit der Atmosphäre der Verpackung in Kontakt steht, wobei die Temperatur des Gaskonzentrationsindikatorsubstanzpunkts (20) und/oder der Verpackungsmulde und/oder der Oberfolie und/oder der Atmosphäre in der Verpackung und/oder eines Verpackungsguts vor und/oder gleichzeitig und/oder nach der Messung der Konzentration mindestens eines Bestandteils der Atmosphäre und/oder der Druck der den Gaskonzentrationsindikatorsubstanzpunkt (20) umgebenden Atmosphäre gemessen wird.

5. Verfahren nach einem der Ansprüche 1 - 4, **dadurch gekennzeichnet, dass** sich eine Folienbahn (8, 14) während des Messens bewegt.

6. Verfahren nach einem der Ansprüche 2 - 4, **dadurch gekennzeichnet, dass** jeder Gaskonzentrationsindikatorsubstanzpunkt mehrfach, insbesondere an unterschiedlichen Stellen, vorzugsweise während er sich an einem Sensor vorbeibewegt wird, gemessen wird.

7. Verfahren nach einem der voranstehenden Ansprüche, **dadurch gekennzeichnet, dass** nur Gutpackungen mit einem Etikett versehen werden.

## Claims

1. Method for producing packaging (10) having a modified atmosphere, in which method an upper film (14) is sealed onto a packaging tray (6), wherein
- prior to sealing, first of all a negative pressure is generated in the packaging tray and thereafter a replacement gas is directed into the packaging tray; or
- the atmosphere situated in the packaging tray is purged from the packaging by way of the replacement gas; or
- only a negative pressure is generated in the packaging;
and in which method, after and/or downstream of sealing, measuring of the concentration of at least one component part of the modified atmosphere and/or the pressure of the latter takes place by way of a sensor (13), **characterized in that** the signal of the sensor (13) is used for determining the nominal negative pressure and/or the nominal pressure upon introduction of the replacement gas and/or the nominal quantity of replacement gas.

2. Method according to Claim 1, **characterized in that** the packaging has a gas concentration indicator substance point which is in contact with the atmosphere of the packaging, wherein this contact is closed prior to the completion of the packaging, and wherein a gas concentration indicator substance point has a substance in which a chemical and/or physical property is modified as the concentration of a gas changes.

3. Method according to Claim 1 or 2, **characterized in that** the measuring of the concentration of at least one component part of the modified atmosphere takes place by way of a gas concentration indicator substance point (20) which is severed after measuring.

4. Method according to one of Claims 1 to 3, **characterized in that** the packaging has a gas concentration indicator substance point (20) which is in contact with the atmosphere of the packaging, wherein the temperature of the gas concentration indicator substance point (20) and/or of the packaging tray and/or of the upper film and/or of the atmosphere in the packaging and/or of a packaged item is measured before and/or simultaneously with and/or after the measuring of the concentration of at least one component part of the atmosphere, and/or the pressure of the atmosphere surrounding the gas concentration indicator substance point (20) is measured.

5. Method according to one of Claims 1 to 4, **characterized in that** a film web (8, 14) moves during measuring.

6. Method according to one of Claims 2 to 4, **characterized in that** each gas concentration indicator substance point is measured multiple times, in particular at different locations, preferably while said gas concentration indicator substance point moves past a sensor.

7. Method according to one of the preceding claims, **characterized in that** only approved packages are provided with a label.

## Revendications

1. Procédé de fabrication d'un emballage (10) ayant une atmosphère modifiée, selon lequel un film supérieur (14) est scellé sur une cavité d'emballage (6) :
- avant le scellement, une dépression étant tout d'abord générée dans la cavité d'emballage et un gaz de remplacement étant ensuite introduit dans la cavité d'emballage, ou
- l'atmosphère se trouvant dans la cavité d'emballage étant évacuée de l'emballage avec le gaz de remplacement, ou
- seulement une dépression étant générée dans l'emballage,
et selon lequel, après et/ou en aval du scellement, une mesure de la concentration d'au moins un constituant de l'atmosphère modifiée et/ou de sa pression a lieu avec un capteur (13), **caractérisé en ce que** le signal du capteur (13) est utilisé pour déterminer la dépression de consigne et/ou la pression de consigne après l'introduction du gaz de remplacement et/ou la quantité de consigne de gaz de remplacement.

2. Procédé selon la revendication 1, **caractérisé en ce que** l'emballage présente un point de substance indicatrice de concentration de gaz, qui est en contact avec l'atmosphère de l'emballage, ce contact étant fermé avant l'achèvement de l'emballage, et un point de substance indicatrice de concentration de gaz présentant une substance dont une propriété chimique et/ou physique se modifie avec la concentration d'un gaz.

3. Procédé selon la revendication 1 ou 2, **caractérisé en ce que** la mesure de la concentration d'au moins un constituant de l'atmosphère modifiée a lieu avec un point de substance indicatrice de concentration de gaz (20), qui est séparé après la mesure.

4. Procédé selon l'une quelconque des revendications 1 à 3, **caractérisé en ce que** l'emballage présente un point de substance indicatrice de concentration de gaz (20), qui est en contact avec l'atmosphère de l'emballage, la température du point de substance indicatrice de concentration de gaz (20) et/ou de la cavité d'emballage et/ou du film supérieur et/ou de l'atmosphère dans l'emballage et/ou d'un produit emballé étant mesurée avant et/ou simultanément et/ou après la mesure de la concentration d'au moins un constituant de l'atmosphère et/ou de la pression de l'atmosphère entourant le point de substance indicatrice de concentration de gaz (20).

5. Procédé selon l'une quelconque des revendications 1 à 4, **caractérisé en ce qu'**une bande de film (8, 14) se déplace pendant la mesure.

6. Procédé selon l'une quelconque des revendications 2 à 4, **caractérisé en ce que** chaque point de substance indicatrice de concentration de gaz est mesuré plusieurs fois, notamment à différents emplacements, de préférence pendant qu'il se déplace devant un capteur.

7. Procédé selon l'une quelconque des revendications précédentes, **caractérisé en ce que** seuls les bons emballages sont munis d'une étiquette.
